# EUROPEAN PATENT APPLICATION

(11) **EP 3 346 152 A1**
(43) Date of publication of application: **11.07.2018**
(21) Application number: 17020564.5
(22) Date of filing: 08.12.2017
(51) Int. Cl.: F16D 41/07, F16C 19/50

(54) **ONE-WAY ROLLER CLUTCH**

(30) Priority: 08.12.2016 BG 365316
(71) Applicant: VANIKO, Limited Liability Company, 2700 Blagoevgrad (BG)
(72) Inventor: Stoev, Stoicho Kolev, BG-4000 Plovdiv (BG); Vajarov, Methodi Sashov, BG-2700 Blagoevgrad (BG)
(74) Representative: Manev, Kostadin Chanev

(57) **Abstract**

The utility model refers to a one-way roller clutch that will find application in the mechanical engineering and particularly in automatically coupling and splitting of shafts in various machines and devices, such as spring-winding machines and automatic machines.

The created one-way roller clutch, includes an outer ring and an inner ring, where between the working cylindrical surfaces of both rings are situated cylindrical rollers. Between the cylindrical rollers that are supporting rollers (3), are inserted small wedging rollers (4), which are in contact with the external cylindrical surface of the inner ring (2) and large wedging rollers (5), which are in contact with the internal cylindrical surface of the outer ring (1). The small and the large wedging rollers (4 and 5) are in contact with each other.

## Description

### TECHNICAL FIELD

The utility model refers to a one-way roller clutch that will find application in mechanical engineering and particularly in automatically coupling and splitting of shafts in various machines and devices, such as spring-winding machines and automatic machines.

### BACKGROUND OF THE UTILITY MODEL

There are one-way clutches, consisted of an inner and an outer rings, where as wedging elements are used a guiding spring element and a working spring [2], [3], [4]. There are also one-way clutches, where as wedging elements are used eccentric rollers, located between cylindrical rings and also one-way clutches with wedge and belt wedging elements [5], as well as one-way clutches with tapered rings [4].

It is also known a one-way clutch, consisted of an inner ring and an outer ring, where as wedging element between the rings is used a sphere or a cylindrical roller, and the wedging itself is effected by cam contours on the inner or the outer ring [1].

In the practice are also used combinations of different wedging elements depending on the specific constructive task to solve.

When using the famous clutches it is requested an extra bearing arrangement and guaranteeing their constructions regarding the alignment of the inner and the outer ring. In addition, the wedging in the well-known constructions is carried out with predominant friction when sliding, and not when rolling, which in turn leads to fast wear of the wedging elements in the points or the lines of wedging. These constructions are not well balanced, which requires adjustment of the rotating tables during major changes of the revolutions. And yet, the famous clutches may be used in machines, working within a narrow speed range and number of inclusions.

### SUMMARY OF THE UTILITY MODEL

The task of the utility model is to create a one-way roller clutch with a simplified structure, which provides the transmission of a torque from one shaft to another in one direction of rotation and with the same angular speeds of the two shafts.

The task is solved by creating a one-way roller clutch that includes an outer ring and an inner ring. Between the working cylindrical surfaces of both rings are situated cylindrical rollers. In accordance with the utility model, between the cylindrical rollers, which are supporting rollers, are situated small wedging rollers, which are in contact with the external cylindrical surface of the inner ring. Between the supporting cylindrical rollers are situated also large wedging rollers, which are in contact with the internal cylindrical surface of the outer ring. The small and the large wedging rollers are in contact with each other.

Advantages of the created one-way roller clutch are providing of: - alignment of the inner ring and the outer ring; - dropping out the need for additional bearing arrangement of the clutch; - a larger wedging area in the relatively small dimensions of the clutch; - wedging with predominant friction when rolling and less wear of the wedging rollers and rings. In addition, the design of the created clutch presumes work in a wide range of the angular velocity and number of inclusions, as well as change of the load, without necessity of balancing of rotating tables, as well as the possibility to optimize the angle of wedging without the need to shape the wedging elements.

### BRIEF DESCRIPTION OF THE DRAWING

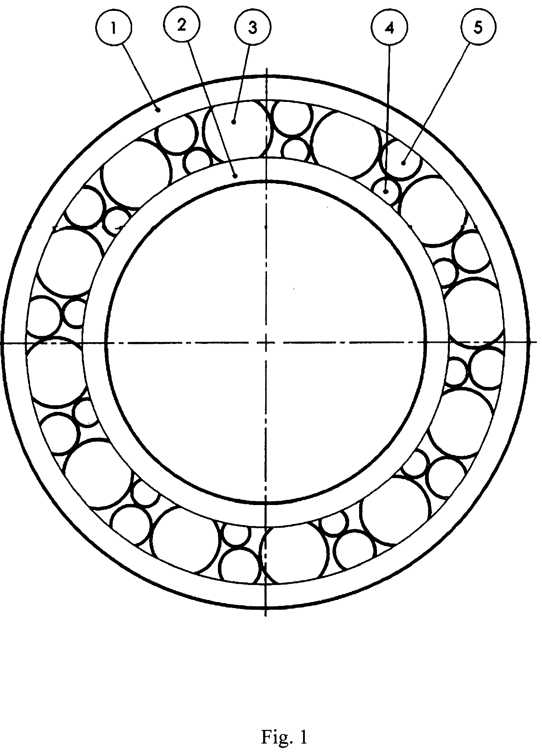

The created one-way roller clutch is illustrated on the attached figure 1, which is a principal scheme of a one-way roller clutch, according to the utility model.

### DETAILED DESCRIPTION OF EMBODIMENT OF THE UTILITY MODEL

The one-way clutch, shown in figure 1, is composed of an outer ring 1 with an internal cylindrical working surface, inner ring 2 with an external cylindrical working surface, while between the working surfaces of the two rings are situated cylindrical supporting rollers 3 and inserted between the supporting rollers towards the external cylindrical surface of the inner ring 2 are small wedging rollers 4, which are touched by large wedging rollers 5, the latter contacting with the internal cylindrical surface of the outer ring 1.

The operation of the one-way clutch according to the utility model is the following. When rotating the drive shaft, together with the fixed inner ring 2, in one direction, the supporting rollers 3 rotate as elements of a radial roller bearing and act as a separator of the small wedging rollers 4 and of the large wedging rollers 5, while the rollers 4 and 5 rotate freely. When rotating the drive shaft, together with the fixed inner ring 2, in the other direction, the inner ring 2 due to the forces of friction between the shaft and the small wedging rollers 4, as well as due to the friction forces between the large wedging rollers 5 and the outer ring 1, cause wedging of the system by the inner ring 1, the small wedging rollers 4, the large wedging rollers 5 and the outer ring 1, which is fixed to the drive shaft.

### References

1. Ralev, D. N., Machine elements, part I, chapter 6, Sofia, 2002.
2. Kossett, John, Dual press-fit wrap spring clutch, US 20050230212, 2005.
3. Charles, Pitter Walter, Spring clutch, Nº1940880, 1933.
4. Starkey, William, C., Clutch spring, US pat. Nº2030333, 1936.
5. Austin, Max M., Boulton, Norman, B., Slip clutch assembly, US pat.Nº3731773, 1973.

## Claims

1. A one-way roller clutch that includes an outer ring and an inner ring, where between the working cylindrical surfaces of the two rings are located cylindrical rollers, being **characterized by** the fact that between the cylindrical rollers that are supporting rollers (3), are installed small wedging rollers (4), which are in contact with the external cylindrical surface of the inner ring (2) and large wedging rollers (5), which are in contact with the internal cylindrical surface on the outer ring (1), whereby the small and the large wedging rollers (4 and 5) are in contact with each other.
